# EUROPÄISCHE PATENTSCHRIFT

(11) **EP 1 526 908 B1**
(45) Veröffentlichungstag und Bekanntmachung des Hinweises auf die Patenterteilung: **23.11.2005**
(21) Anmeldenummer: 03792175.6
(22) Anmeldetag: 04.07.2003
(51) Int. Cl.: B01D 29/09, B01D 29/60, B01D 29/96

(54) **HYDROMECHANISCHE ANTRIEBSVORRICHTUNG**
HYDROMECHANICAL DRIVING DEVICE
DISPOSITIF DE COMMANDE HYDROMECANIQUE

(30) Priorität: 07.08.2002 DE 10236085
(43) Veröffentlichungstag der Anmeldung: 04.05.2005
(73) Patentinhaber: HYDAC FILTERTECHNIK GMBH, 66280 Sulzbach/Saar (DE)
(72) Erfinder: GLAUBITZ, Manfred, Robert, 45472 Mühlheim (DE)
(74) Vertreter: Bartels, Martin Erich Arthur
(86) Internationale Anmeldenummer: PCT/EP2003/007162
(87) Internationale Veröffentlichungsnummer: WO 2004/018075

(56) Entgegenhaltungen:
- DE-U- 9 217 783
- FR-A- 2 698 283
- GB-A- 1 154 101
- US-A- 4 399 622

## Beschreibung

Die Erfindung bezieht sich auf eine hydromechanische Antriebsvorrichtung einer Bandfiltereinrichtung, um Vorschubbewegungen des bandförmigen Filtermaterials der Bandfiltereinrichtung in Abhängigkeit von dem in dem zu filternden Fluid herrschenden Druck zu erzeugen.

Bandfiltereinrichtungen, bei denen bandförmiges Filtermaterial als Separationsmedium benutzt wird, sind bekannt, vgl. DE 43 11 297 A1 oder DE 93 01 154 U1. Beim Betrieb derartiger Einrichtungen finden Vorschubbewegungen des Filtermaterials in Abhängigkeit von dem Verschmutzungsgrad des jeweils durchströmten Bandbereiches des Filtermaterials statt, um bedarfsweise frisches Filtermaterial für den Filtrationsvorgang zur Verfügung zu stellen. Da bei zunehmendem Verschmutzungsgrad des Filtermaterials der Differenzdruck zwischen der Schmutzseite und der Reinseite der Bandfiltereinrichtung ansteigt, kann die Größe dieser Druckdifferenz oder die Höhe des sich in dem das zu filternde Fluid enthaltenden Raum herrschenden Druckes als Maßgabe für das Einleiten einer Vorschubbewegung des Filtermaterials dienen.

Der Vorschub des bandförmigen Filtermaterials kann in bekannter Weise durch Aufwickeln des Filtermaterials erfolgen. Wie dies beispielsweise in der nicht zum Stand der Technik gehörenden Deutschen Patentanmeldung 101 26 443.7 gezeigt ist, wird hierbei von einem Wickel, der den Vorrat des Filtermaterials enthält, verschmutztes Band sukzessive auf einen mit der Antriebswelle der Antriebsvorrichtung verbundenen Wickel aufgewickelt. Bei solchen Bandfiltereinrichtungen wird der das unverbrauchte Filtermaterial aufweisende Vorratswickel von außen nach innen von dem zu filternden Fluid durchströmt, so dass die beim Filtrationsvorgang erfolgende Verschmutzung des Filtermaterials an den jeweils äußersten Lagen des Wickels stattfindet, die bei entsprechendem Verschmutzungsgrad vom Vorratswickel abgewickelt und auf dem mit der Antriebswelle der Antriebsvorrichtung verbundenen Wickel aufgewickelt werden.

Die üblicherweise vorgesehenen, elektromotorischen Antriebsvorrichtungen zur Erzeugung der Vorschubbewegung durch Drehen der entsprechenden Wickelwelle führen zu einem verhältnismäßig hohen baulichen Aufwand und entsprechend hohen Kosten.

Der Erfindung liegt die Aufgabe zugrunde, diesbezüglich Abhilfe zu schaffen, indem eine Antriebsvorrichtung zur Verfügung gestellt wird, die sich durch einen besonders einfachen Aufbau und entsprechend niedrige Herstell ungskosten auszeichnet.

Erfindungsgemäß löst diese Aufgabe eine hydromechanische Antriebsvorrichtung, um für den Betrieb von Bandfiltereinrichtungen Vorschubbewegungen des bandförmigen Filtermaterials in Abhängigkeit von dem in dem zu filternden Fluid herrschenden Druck zu erzeugen, die aufweist:
- einen Hydrospeicher mit einem einen ersten und einen zweiten Speicherraum trennenden, beweglichen Trennelement, das auf seiner an den ersten Speicherraum angrenzenden Seite mit dem darin herrschenden Druck des zu filternden Fluids beaufschlagbar ist,
- eine eine Bewegung des Trennelementes in die Vorschubbewegung umsetzende Mechanik und
- eine Drucksteuereinrichtung, um in dem zweiten Speicherraum in Abhängigkeit von der Höhe des Druckes und/oder des Verschmutzungsgrades des filternden Fluides einen demgegenüber niedrigeren, die Bewegung des Trennelementes bewirkenden Druck zu erzeugen.

Dadurch, dass erfindungsgemäß anstelle der beim Stand der Technik vorgesehenen elektromotorischen Antriebssysteme ein hydromechanischer Antrieb vorgesehen ist, ergibt sich eine wesentliche Vereinfachung, weil weder eine äußere Energieversorgung noch eine entsprechende Steuerelektronik erforderlich sind. Bei der Erfindung dient der Druck des zu filternden Fluides aufgrund der durch ihn bewirkten Bewegung des Trennelementes des Hydrospeichers sowohl als Energiequelle für den Antrieb als auch als Steuergröße für die Einleitung der Vorschubbewegung, da durch die Verschmutzung des am Filtrationsvorgang beteiligten Bandabschnittes ein entsprechender Druckanstieg in dem das verschmutzte, zu filternde Fluid enthaltenden Raum der Bandfiltereinrichtung stattfindet. Der dahingehende Vorgang ist selbstregelnd, so daß eine Wandlung von Druck in ein elektrisches Signal entfallen kann.

Bei einem bevorzugten Ausführungsbeispiel kann die Drucksteuereinrichtung, die in dem einen der Speicherräume des Hydrospeichers einen Druck erzeugt, der niedriger ist als der Druck des zu filternden Fluides, so dass eine Bewegung des Trennelementes des Hydrospeichers und damit eine Vorschubbewegung des Filtermaterials erzeugt wird, ein Steuerventil aufweisen, das durch die Bewegung des Trennelementes betätigbar ist. Hierbei kann die Anordnung so getroffen sein, dass an dem betreffenden Speicherraum zwei Fluidanschlüsse vorgesehen sind, über deren ersten Anschluß in diesem Speicherraum der gegenüber dem Druck des im ersten Speicherraum befindlichen, zu filternden Fluids niedrigere Druck erzeugbar ist, während über den zweiten Fluidanschluß, da dieser mit dem zu filternden Fluid verbunden ist, der gleiche Druck erzeugbar ist, wie er im ersten Speicherraum herrscht.

Bei dieser Anordnung ist das Steuerventil so ausgebildet, dass es durch die Bewegung des Trennelementes des Hydrospeichers in der Weise betätigt wird, dass bei einer Endstellung des Trennelementes der erste Fluidanschluß freigegeben und der zweite Fluidanschluß gesperrt wird und bei der anderen Endstellung des Trennelementes der zweite Fluidanschluß freigegeben und der erste Fluidanschluß gesperrt wird.

Um in dem zweiten Speicherraum den gegenüber dem Druck des zu filternden Fluides niedrigeren Druck über den ersten Fluidanschluß zu erzeugen, kann an diesem Anschluß ein Druckbegrenzungsventil vorgesehen sein, das auf einen Druckwert einstellbar ist, der niedrigerer ist als der am zweiten Fluidanschluß anstehende Druck des zu filternden Fluids. Alternativ kann dieser Fluidanschluß auch mit dem Raum der Bandfiltereinrichtung in Verbindung sein, der das gefilterte Fluid enthält, das einen gegenüber dem Druck des zu filternden Fluids niedrigeren Druck aufweist.

Aufgrund des hydrodynamischen Arbeitsprinzips der erfindungsgemäßen Antriebsvorrichtung, bei der keine äußere Energieversorgung oder externe Steuerung erforderlich sind, läßt sich die Antriebsvorrichtung in die betreffende Bandfiltereinrichtung integrieren. Beispielsweise kann die Antriebsvorrichtung zur Gänze in die betreffende Bandfiltereinrichtung so eingebaut werden, dass sich der Hydrospeicher in dem oder an dem das zu filternde Fluid enthaltenden Raum befindet, das unmittelbar in den ersten Speicherraum des Hydrospeichers durch entsprechende Durchlässe eintreten kann. Vorzugsweise findet als Hydrospeicher ein Membranspeicher Verwendung. Die Mechanik zur Erzeugung der Vorschubbewegung aufgrund der hin und hergehenden Bewegung des Trennelementes, beispielsweise der Membran des Membranspeichers, kann eine hin und hergehende, mit dem Trennelement verbundene Betätigungsstange als Teil eines Ratschenantriebes aufweisen, der die hin und hergehende Bewegung mittels eines Klinkenrades und einer mit dessen Verzahnung zusammenwirkenden Klinke in eine nur in einem Drehsinn (Aufwickeldrehsinn) erfolgende Drehbewegung umsetzt, um die Wickelwelle für die Aufnahme des Wickels mit dem verschmutzten Filtermaterial zu drehen. Anstelle des Klinkenrades könnte auch ein sonstiger Ratschenantrieb, beispielsweise ein Freilaufantrieb (nicht dargestellt), eingesetzt sein.

Nachstehend ist die Erfindung anhand eines in der Zeichnung dargestellten Ausführungsbeispieles im einzelnen erläutert. Es zeigen:
- Fig. 1 einen schematisch stark vereinfachten Längsschnitt nur des Membranspeichers des Ausführungsbeispieles der erfindungsgemäßen Antriebsvorrichtung;
- Fig. 2 eine schematisierte Funktionsskizze des Ausführungsbeispieles der Antriebsvorrichtung und
- Fig. 3 eine schematisierte Funktionsskizze in Form einer Draufsicht auf denjenigen Teil einer Bandfiltereinrichtung, in dem ein Vorratswickel bandförmigen Filtermaterials und ein mittels der erfindungsgemäßen Antriebsvorrichtung zu drehender Wickel für das Aufwickeln benutzten Filtermaterials untergebracht sind.

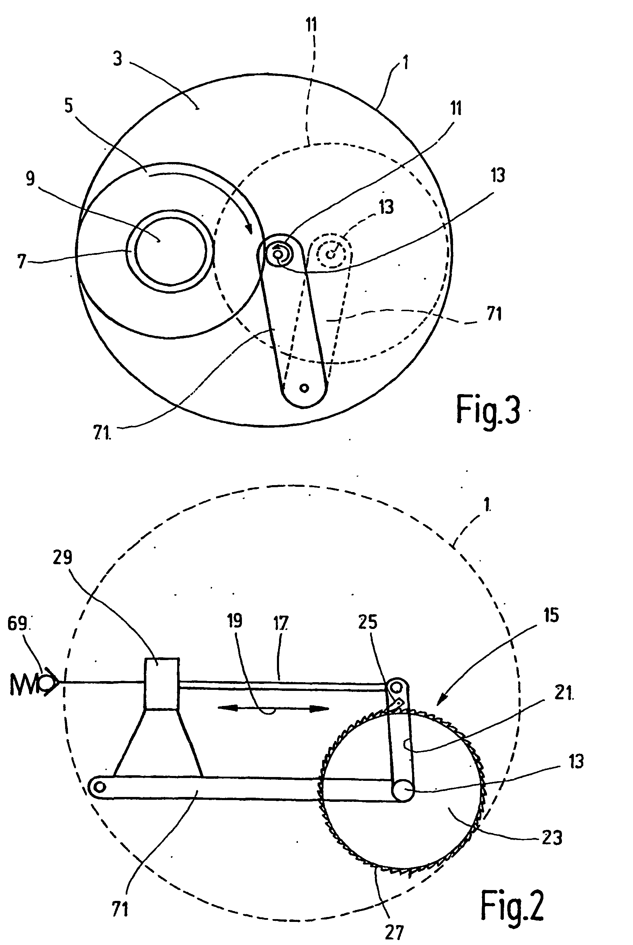

Fig. 3 zeigt in stark schematisierter Darstellung innerhalb eines Gehäuses 1 den Raum 3, in dem sich ein zu filterndes, schmutzbelastetes Fluid befindet. Im Raum 3 ist frei drehbar ein Vorratswickel 5 mit bandförmigem Filtermaterial auf einem fluiddurchlässigen Kern 7 gelagert. Der innerhalb des Kernes 7 befindliche Raum 9 nimmt das gefilterte Fluid auf, welches den Wickel 5 von außen nach innen, d. h. vom Raum 3 her, durchströmt, wobei der Filtrationsgvorgang durch Tiefenfiltrationswirkung stattfindet und sich die ausgefilterten Schmutzpartikel an den äußersten Lagen des Vorratswikkels 5 absetzen.

Der Anstieg der Druckdifferenz zwischen dem Raum 3 mit dem zu filternden Fluid und dem Raum 9 mit dem gefilterten Fluid, wie er sich aufgrund der Zunahme des Verschmutzungsgrades der äußeren Lagen des Vorratswickels 5 ergibt, dient als Steuergröße für die Auslösung eines Vorschubvorganges für das bandförmige Filtermaterial. Hierbei wird dieses vom Vorratswickel 5 ab- und auf einen Aufnahmewickel 11 aufgewickelt. Die sich bei dieser Vorschubbewegung ergebenden Drehrichtungen von Vorratswikkel 5 und Aufnahmewickel 11 sind durch Bogenpfeile angedeutet. Der Aufnahmewickel 11 wird durch eine Wickelwelle 13 (siehe auch Fig. 2) der erfindungsgemäßen Antriebsvorrichtung in Drehung versetzt.

Fig. 2 zeigt schematisch vereinfacht den als Ganzes mit 15 bezeichneten Ratschenantrieb, welcher die Drehbewegung der Wickelwelle 13 aufgrund hin und hergehender Bewegungen einer Betätigungsstange 17 erzeugt. Die in Richtung des Doppelpfeiles 19 hin und hergehenden Bewegungen der Stange 17 führen zu hin und hergehenden Schwenkbewegungen eines um die Wickelwelle 13 frei schwenkbaren Klinkenhebels 21, an dem eine für den Eingriff in die Verzahnung 27 eines Klinkenrades 23 federbelastete Klinke 25 angelenkt ist. Diese Klinke 25 wirkt mit der sägezahnartigen Verzahnung 27 des Klinkenrades 23 so zusammen, dass lediglich bei Bewegung der Betätigungsstange 17 nach links in Fig. 2 eine Drehbewegung des Klinkenrades 23 entgegen dem Uhrzeigersinn erfolgt.

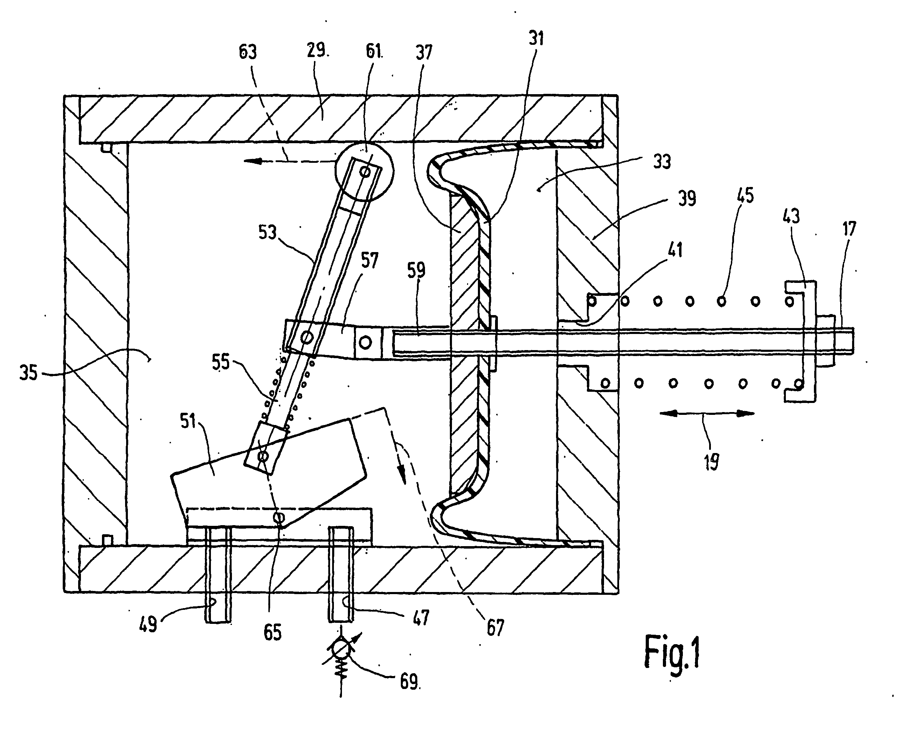

Nähere Einzelheiten der hydromechanischen Einrichtung zum Erzeugen der hin und hergehenden Bewegung der Stange 17 sind in Fig. 1 dargestellt. Diese Einrichtung weist einen Hydrospeicher in Form eines Membranspeichers 29 auf, dessen Membran 31 ein bewegliches Trennelement zwischen einem ersten Speicherraum 33 und einem zweiten Speicherraum 35 bildet. Eine Druckplatte 37, die an der Membran 31 an deren dem Speicherraum 35 zugewandten Seite anliegt, ist mit der Betätigungsstange 17 fest verbunden, die sich, zentral gelegen, in Längsrichtung des Gehäuses des Membranspeichers 29 erstreckt und bei Bewegungen der Membran 31 in dieser Längsrichtung hin und hergehend (Doppelpfeil 19) bewegbar ist. Der am Speicherraum 33 befindliche, endseitige Deckel 39 bildet nicht nur eine Führung für die Betätigungsstange 17, sondern weist auch Durchlässe 41 auf, über die der Speicherraum 33 mit dem das zu filternde Fluid enthaltenden Raum 3 (siehe Fig. 3) der Bandfiltereinrichtung in Verbindung ist, so dass im Speicherraum 33 im Betrieb der Druck des zu filternden Fluides herrscht. Am Deckel 39 sowie an einer Anschlagplatte 43 der Betätigungsstange 17 stützt sich eine Druckfeder 45 ab, so dass die Membran 31 und die Betätigungsstange 17 für eine Bewegung in der Zeichnung nach rechts in eine in Fig. 1 gezeigte Endstellung vorgespannt ist.

Der in Fig. 1 linksseitig gelegene Raum 35 ist bis auf einen ersten Fluidanschluß 47 und einen zweiten Fluidanschluß 49 geschlossen. Ein im Raum 35 befindliches Steuerventil weist einen beweglichen Ventilkörper 51 auf. Der in Fig. 1 lediglich schematisch vereinfacht angedeutete Ventilkörper 51 bildet Teil eines Sitzventils, durch das, abhängig von der Stellung des Ventilkörpers 51, jeweils einer der Fluidanschlüsse 47, 49 geöffnet und der jeweils andere Anschluß 47, 49 geschlossen werden kann. Der Ventilkörper 51 ist durch die Bewegung der Membran 31 steuerbar. Bei der in Fig. 1 gezeigten, rechtsseitig gelegenen Endstellung der Membran 31 befindet sich der Ventilkörper 51 in einer Position, bei der der erste Fluidanschluß 47 geöffnet und er zweite Fluidanschluß 49 geschlossen ist. Die Betätigung des Ventilkörpers 51 erfofgt über ein ihn mit der Membran 31 kuppelndes, überzentrisches Kippsprungwerk in der Weise, dass die Stellung des Ventilkörpers 51 lediglich in den beiden Endstellungen der Membran 31 praktisch schlagartig umgeschaltet wird. Dieses Kippsprungwerk weist einen am Ventilkörper 41 angelenkten, in einer Hülse 53 gegen Federbelastung verschiebbar geführten Betätigungstößel 55 auf. Die Hülse 53 ist über einen gabelförmigen Lenker 57 mit dem zugekehrten Ende 59 der Betätigungsstange 17 gelenkig verbunden. Am freien Ende der Hülse 53 befindet sich eine Rolle 61, die an der Innenseite des Membranspeichergehäuses abrollt.

Bei einer Bewegung der Membran 31 aus der in Fig. 1 gezeigten Endstellung nach links bewegt sich die Hülse 53, wobei die Rolle 61 in Richtung eines Pfeiles 63 an der Speicherinnenwand abrollt, wobei der Stößel 55 gegen Federkraft in die Hülse 53 geringfügig einfährt. Bei Erreichen der überzentrischen Stellung der Hülse 53, was bei dem Erreichen der linksseitigen Endstellung der Membran 31 der Fall ist, schlägt der Stößel 55 aufgrund seiner Federbelastung den Ventilkörper 51 um seinen mit 65 bezeichneten Drehpunkt mit einer Schwenkbewegung, die mit gestricheltem Pfeil 67 angedeutet ist, in die andere Ventilstellung um, so dass der Fluidanschluß 49 schlagartig geöffnet und der Fluidanschluß 47 schlagartig geschlossen wird.

Die Funktionsweise der Antriebsvorrichtung ist wie folgt: bei der in Fig. 1 gezeigten Arbeitsstellung herrscht in dem Speicherraum 33 der Druck des zu filternden Fluids. Der im anderen Speicherraum 35 herrschende Druck ist mittels eines am Fluidanschluß 47 befindlichen Druckbegrenzungsventils 69 auf einem demgegenüber niedrigeren Druck eingestellt. Wenn beim Betrieb der Bandfiltereinrichtung aufgrund zunehmenden Verschmutzungsgrades des Filtermaterials der Druck des zu filternden Fluides und damit der Druck im Speicherraum 33 auf einen Wert ansteigt, bei dem die Wirkung der Rückstellfeder 45, die die Membran 31 in der in Fig. 1 rechts gelegenen Endstellung zu halten sucht, überwunden wird, bewegt sich die Membran 31 und damit die Betätigungsstange 17 in der Zeichnung nach links, wobei, siehe Fig. 2, die Wickelwelle 13 mittels des Ratschenantriebes 15 gedreht wird, so dass durch den Antrieb des Aufnahmewickels 11 mittels der Wikkelwelle 13 verbrauchtes Filtermaterial vom Vorratswickel 5 ab- und auf den Aufnahmewickel 11 aufgewickelt wird.

Bei Erreichen der linksseitigen Endstellung der Membran 31 (diese Stellung ist nicht gezeigt) schlägt das Kippsprungwerk den Ventilkörper 51 schlagartig um, so dass aufgrund der Schwenkbewegung entsprechend dem Pfeil 67 (Fig. 1) der Fluidanschluß 49 geöffnet und der Fluidanschluß 47 geschlossen wird. Der Fluidanschluß 49 ist mit dem zu filternden Fluid (Raum 3 in Fig. 3) verbunden, so dass nunmehr im Speicherraum 35 der gleiche Druck wie im Speicherraum 33 herrscht, wodurch die Membran 31 durch die Rückstellkraft der Feder 45 wieder in der Zeichnung nach rechts in die in Fig. 1 gezeigte Endstellung bewegt wird, wobei das Kippsprungwerk den Ventilkörper 51 wiederum in die in Fig. 1 gezeigte Ventilstellung umschlägt, so dass der Ausgangszustand wieder erreicht ist, d. h. ein Arbeitsspiel abgeschlossen ist.

Anstelle des in Fig. 1 und 2 gezeigten Anschlusses eines einstellbaren Druckbegrenzungsventiles am Fluidanschluß 47 könnte der Fluidanschluß 47 unmittelbar mit dem das gefilterte Fluid enthaltenden Raum 9 (Fig. 3) verbunden sein, wo ein niedrigeres Druckniveau herrscht als im Raum 3. Bei Benutzung eines Druckbegrenzungsventils 69 wird die anfallende Lenkmenge in den (nicht dargestellten) Tank vor der Bandfiltereinrichtung abgeführt.

Fig. 2 und 3 zeigen, dass die gesamte Antriebsvorrichtung in das Gehäuse 1 einer betreffenden Bandfiltereinrichtung eingebaut ist. Wie aus Fig. 3 entnehmbar ist, wird bei fortschreitendem Betrieb, wo Filtermaterial sukzessive vom Vorratswickel 5 ab- und auf den Ausnahmewickel 11 aufgewickelt wird, letzterer im Durchmesser größer, während der Durchmesser des Vorratswickels 5 kleiner wird. Wie Fig. 2 und 3 zeigen, sind in Anpassung an diesen Umstand die Wickelwelle 13 und der Aufnahmewickel 11 an einer schwenkbar gelagerten Schwinge 71 angebracht. Wie Fig. 2 zeigt, sind an dieser Schwinge 71 sämtliche Komponenten der Antriebsvorrichtung angebracht, also sowohl der Membranspeicher 29 mit der Betätigungsstange 17 als auch der dadurch betätigbare Ratschenantrieb 15 für die Wickelwelle 13. Bei der Vergrößerung des Durchmessers des Aufnahmewickels 11 ist daher die gesamte Antriebsvorrichtung mit der Schwinge 71 zur Anpassung an den Wickeldurchmesser beweglich, so dass die Drehachse der Wickelwelle 13 so verlagerbar ist, wie dies in Fig. 3 mit gestrichelten Linien gezeigt ist. Anstelle des beim Ausführungsbeispiel vorgesehenen Membranspeichers 29 kann ein andersartiger Hydrospeicher mit beweglichem Trennelement Verwendung finden, um die Betätigungsstange 17 der Antriebsvorrichtung hin und hergehend zu betätigen. Der genannte Hydrospeicher dient nicht im klassischen Sinne dem Einspeichern von hydraulischer Energie, sondern ist hier mehr als Medien-Trennelement zu verstehen, wobei ein Trennelement 31 zwei Speicherräume 33,35 Medien trennend voneinander separiert.

Anstelle der aufgezeigten Druckdifferenz könnte auch der Staudruck abgenommen werden, der mit wachsendem Verschmutzungsgrad zunimmt. Dabei wird vorzugsweise der Speicherraum 35 mit dem Tank über das Ventil 69 verbunden. Die Größe der Druckdifferenz oder des Staudruckes läßt sich über die Federkraft des genannten Ventils 69 einstellen. Durch das Kippsprungwerk 53,55 ist darüber hinaus eine Sicherheitsfunktion realisiert, die einen Auslaßvorgang auslöst, beispielsweise bei unzulässig hohen Druckspitzen im jeweiligen Speicherraum. Da über den Fluidanschluß 49 der Speicherraum 35 mit der Schmutzseite der Vorrichtung verbindbar ist, kann vor dem Anschluß 49 eine entsprechende Filtervorrichtung vorgesehen sein (nicht dargestellt).

## Patentansprüche

1. Hydromechanische Antriebsvorrichtung einer Bandfiltereinrichtung, um Vorschubbewegungen des bandförmigen Filtermaterials der Bandfiltereinrichtung in Abhängigkeit von dem in dem zu filternden Fluid herrschenden Druck zu erzeugen, mit
• einem Hydrospeicher (29) mit einem einen ersten (33) und einen zweiten Speicherraum (35) trennenden, beweglichen Trennelement (31), das auf seiner an den ersten Speicherraum (33) angrenzenden Seite mit dem darin herrschenden Druck des zu filternden Fluids beaufschlagbar ist,
• einer eine Bewegung des Trennelementes (31) in die Vorschubbewegung umsetzenden Mechanik (15, 17) und
• einer Drucksteuereinrichtung (47, 49, 51), um in dem zweiten Speicher raum (35) in Abhängigkeit von der Höhe des Druckes und/oder Verschmutzungsgrades des zu filternden Fluides einen demgegenüber niedrigeren, die Bewegung des Trennelementes (31) bewirkenden Druck zu erzeugen.

2. Antriebsvorrichtung nach Anspruch 1, **dadurch gekennzeichnet, dass** die Drucksteuereinrichtung zwei am zweiten Speicherraum (35) des Hydrospeichers (29) vorgesehene Fluidanschlüsse (47 und 49) aufweist, über deren ersten Anschluß (49) in diesem Speicherraum (35) der gegenüber dem Druck im ersten Speicherraum (33)niedrigere Druck erzeugbar ist und über deren zweiten Anschluß (49) im zweiten Speicherraum (35) der auch im ersten Speicherraum (33) herrschende Druck er zeugbar ist, und dass die Drucksteuereinrichtung ein Steuerventil (51) besitzt, das durch die Bewegung des Trennelementes (31) betätigbar ist, um bei einer Endstellung des Trennelementes (31) den ersten Anschluß (47) frei zu geben und den zweiten Anschluß (49) zu sperren und bei der anderen Endstellung des Trennelementes (31) den zweiten Anschluß (49) frei zu geben und den ersten Anschluß (47) zu sperren.

3. Antriebsvorrichtung nach Anspruch 2, **dadurch gekennzeichnet, dass** der zweite Fluidanschluß (49) sowie der erste Speicherraum (33) des Hydrospeichers (29) mit dem zu filternden Fluid verbunden sind.

4. Antriebsvorrichtung nach Anspruch 2 oder 3, **dadurch gekennzeichnet, dass** der erste Fluidanschluß (47) mit einem Druckbegrenzungsventil (69) verbunden ist, das auf einen Druckwert einstellbar ist, der niedriger ist als der am zweiten Fluidanschluß (49) anstehende Druck des zu filternden Fluids.

5. Antriebsvorrichtung nach Anspruch 2 oder 3, **dadurch gekennzeichnet, dass** der erste Fluidanschluß (47) mit dem durch das bandförmige Filtermaterial gefilterten Fluid (9) verbunden ist, das einen gegenüber dem Druck des zu filternden Fluids niedrigeren Druck aufweist.

6. Antriebsvorrichtung nach einem der Ansprüche 2 bis 5, **dadurch gekennzeichnet, dass** das Steuerventil (51) mit dem beweglichen Trennelement (31) über eine das Umschalten des Steuerventils (51) nur in den Endstellungen des Trennelementes (31) bewirkende kinematische Einrichtung (53,55) verbunden ist.

7. Antriebsvorrichtung nach Anspruch 6, **dadurch gekennzeichnet, dass** als kinematische Einrichtung ein überzentrisches Kippsprungwerk (53,55) für im wesentlichen schlagartiges Öffnen und Schließen der entsprechenden Fluidanschlüsse (47,49) vorgesehen ist.

8. Antriebsvorrichtung nach einem der Ansprüche 2 bis 7, **dadurch gekennzeichnet, dass** das Trennelement (31) mittels einer Federanordnung (45) in seine der Offenstellung des ersten Fluidanschlusses (47) und der Schließstellung des zweiten Fluidanschlusses (49) entsprechende Endstellung vorgespannt ist.

9. Antriebsvorrichtung nach Anspruch 8, **dadurch gekennzeichnet, dass** das bewegliche Trennelement (31) des Hydrospeichers (29) mit einer durch dessen Bewegung in Längsrichtung hin und hergehend verschiebbaren Betätigungsstange (17) verbunden ist, die Teil der die Bewegung des Trennelementes (31) in die Vorschubbewegung des Filtermaterials umsetzenden Mechanik ist.

10. Antriebsvorrichtung nach Anspruch 9, **gekennzeichnet durch** einen mittels der hin und hergehenden Betätigungsstange (17) antreibbaren Ratschenantrieb (15) mit einem **durch** die Bewegung der Betätigungsstange (17) nur in einem Drehsinne antreibbaren Klinkenrad (23) , das mit einer Wickelwelle (13) für den Antrieb eines Wickels (11) des bandförmigen Filtermaterials verbunden ist.

11. Antriebsvorrichtung nach Anspruch 10, **dadurch gekennzeichnet, dass** die die Vorschubbewegung des bandförmigen Filtermaterials erzeugende Mechanik an einer Schwinge (71) angebracht ist, die für eine eine Anpassung an unterschiedliche Wickeldurchmesser des bandförmigen Filtermaterials ermöglichende Verlagerung der Drehachse der Wickelwelle (13) schwenkbar gelagert ist.

12. Antriebsvorrichtung nach einem der Ansprüche 1 bis 11, **dadurch gekennzeichnet, dass** der Hydrospeicher (29) in dem oder an dem das zu filternde Fluid enthaltenden Raum (3) der betreffenden Bandfiltereinrichtung angeordnet ist und sein erster Speicherraum (33) einen den Eintritt des zu filternden Fluides ermöglichenden Durchlaß (41) aufweist.

13. Antriebsvorrichtung nach den Ansprüchen 7 und 12, **dadurch gekennzeichnet, dass** das Trennelement (31) des Hydrospeichers mit einem Steuerglied (57) des das Steuerventil (51) betätigenden Kippsprungwerkes (53,55) gekuppelt ist.

14. Antriebsvorrichtung nach einem der Ansprüche 1 bis 13, **dadurch gekennzeichnet, dass** als Hydrospeicher ein Membranspeicher (29) vorgesehen ist.

15. Antriebsvorrichtung nach den Ansprüchen 13 und 14, **dadurch gekennzeichnet, dass** eine an der Membran (31) des Membranspeichers (29) anliegende Druckplatte (37) vorgesehen ist, die mit dem Steuerglied (57) des Kippsprungwerkes (53,55) gekuppelt ist.

16. Antriebsvorrichtung nach Anspruch 15, **dadurch gekennzeichnet, dass** das Kippsprungwerk (53,55) und das Steuerventil (51) im zweiten Speicherraum (35) des Membranspeichers (29) untergebracht sind.

## Claims

1. Hydro mechanical drive means of a band filter device, for generating advancing movements of the band-shaped filter material of the band filter device depending on the pressure within the fluid that is to be filtered, with
- a hydro store (29) with a moveable separating element (31) separating a first (33) and a second storage chamber (35), which is pressurised on its side adjacent to the first storage chamber (33) by the pressure within the same of the fluid that is to be filtered,
- a mechanism (15, 17) converting a movement of the separating element (31) into the advancing movement, and
- a pressure control device (47, 49, 51), for generating a pressure in the second storage chamber (35) in dependence upon the height of the pressure and/or degree of soiling of the fluid that is to be filtered that is lower than the pressure that effects the movement of the separating element (31).

2. Drive means according to Claim 1, **characterised in that** the pressure control means incorporates two fluid connections (47 and 49) envisaged on the second storage chamber (35) of the hydro store (29), whereby the pressure in this storage chamber (35) that is lower than the pressure in the first storage chamber (33) is to be generated via the first connection (49), and whereby the pressure that exists in the second storage chamber (35) is also to be generated in the first storage chamber (33) via the second connection (49), and **in that** the pressure control means incorporates a control valve (51) to be activated by a movement of the separating element (31) in order to release the first connection (47) and block the second connection (49) when the separating element (31) is positioned in the end position, and in order to release the second connection (49) and block the first connection (47) when the separating element (31) is positioned in the other end position.

3. Drive means according to Claim 2, **characterised in that** the second fluid connection (49) as well as the first storage chamber (33) of the hydro store (29) are connected with the fluid that is to be filtered.

4. Drive means according to Claim 2 or 3, **characterised in that** the first fluid connection (47) is connected with a pressure limiting valve (69) which can be set to a pressure value that is lower than the pressure of the fluid that is to be filtered that exists at the second fluid connection (49).

5. Drive means according to Claim 2 or 3, **characterised in that** the first fluid connection (47) is connected with the fluid (9) that is filtered through the band-shaped filter material, which incorporates a pressure that is lower than the pressure of the fluid that is to be filtered.

6. Drive means according to one of the Claims 2 to 5, **characterised in that** the control valve (51) is connected with the moveable separating element (31) via a kinematic device (53, 55) effecting a switchover of the control valve (51) only in the end positions of the separating element (31).

7. Drive means according to Claim 6, **characterised in that** an overcentered tilt spring device (53, 55) is envisaged as the kinematic device for the substantially immediate opening and closing of the relevant fluid connections (47, 49).

8. Drive means according to one of the Claims 2 to 7, **characterised in that** the separating element (31) is pre-tensioned by means of a spring arrangement (45) into its end position equalling the open position of the first fluid connection (47) and the closed position of the second fluid connection (49).

9. Drive means according to Claim 8, **characterised in that** the moveable separating element (31) of the hydro store (29) is connected with an activating rod (17) that is reciprocably moveable in a longitudinal direction by moving the same, and **in that** th same is a part of the mechanism converting the movement of the separating element (31) into the advancing movement of the filter material.

10. Drive means according to Claim 9, **characterised by** a ratchet drive (15) that is driven by means of the reciprocating activating rod (17), with a sprocket wheel (23) that can be driven only in a rotational direction by the movement of the activating rod (17), and is connected with a winding shaft (13) for driving a bobbin (11) of the band-shaped filter material.

11. Drive means according to Claim 10, **characterised in that** the mechanism generating the advancing movement of the band-shaped filter material is located on a swing (71) which is tiltably affixed to adapt to varying bobbin diameters of the filter material and enables displacement of the axis of rotation of the winding shaft (13).

12. Drive means according to one of the Claims 1 to 11, **characterised in that** the hydro store (29) is positioned in the or at the chamber (3) containing the fluid that is to be filtered of the relevant band filter device, and **in that** its first storage chamber (33) incorporates a passage (41) enabling the inlet of fluid that is to be filtered.

13. Drive means according to Claims 7 and 12, **characterised in that** the separating element (31) of the hydro store is coupled with a control member (57) of the tilt spring device (53, 55) activating the control valve (51).

14. Drive means according to one of the Claims 1 to 13, **characterised in that** a membrane store (29) is envisaged as the hydro store.

15. Drive means according to Claims 13 and 14, **characterised in that** a pressure plate (37) is envisaged on the membrane (31) of the membrane store (29), which is coupled with the control member (57) of the tilt spring device (53, 55).

16. Drive means according to Claim 15, **characterised in that** the tilt spring device (53, 55) and the control valve (51) are located within the second storage chamber (35) of the membrane store (29).

## Revendications

1. Dispositif de commande hydromécanique d'un équipement à bande filtrante pour générer des mouvements d'avance du matériau filtrant en forme de bande dans l'équipement à bande filtrante en fonction de la pression qui règne dans le fluide à filtrer, avec
- un accumulateur hydraulique (29) avec un élément de séparation mobile (31) qui sépare un premier (33) et un deuxième espace de retenue (35) et qui peut, sur son côté adjacent au premier espace de retenue (33) être soumis à la pression du fluide à filtrer qui y règne,
- un mécanisme (15, 17) qui transforme un mouvement de l'élément de séparation (31) en mouvement d'avance et
- un dispositif de commande de la pression (47, 49, 51) pour générer dans le deuxième espace de retenue (35) une pression plus faible en comparaison qui provoque le mouvement de l'élément de séparation (31), en fonction de la hauteur de la pression et/ou du degré de contamination du fluide à filtrer.

2. Dispositif de commande selon la revendication 1, **caractérisé en ce que** le dispositif de commande de pression comporte deux prises de fluide (47 et 49) prévues sur le deuxième espace de retenue (35) de l'accumulateur hydraulique (29), **en ce que** via la première prise (49) de ce dernier une pression plus faible peut être générée dans cet espace de retenue (35), **en ce que** via la deuxième prise (49) de ce dernier la pression qui règne également dans le premier espace de retenue (33) peut être générée dans le deuxième espace de retenue (35) et **en ce que** le dispositif de commande de pression possède une soupape de commande (51) qui peut être actionnée par le mouvement de l'élément de séparation (31), afin de libérer la première prise (47) et de bloquer la deuxième prise (49) dans une position finale de l'élément de séparation (31) et de libérer la deuxième prise (49) et de bloquer la première prise (47) dans l'autre position finale de l'élément de séparation.

3. Dispositif de commande selon la revendication 2, **caractérisé en ce que** la deuxième prise de fluide (49) ainsi que le premier espace de retenue (33) de l'accumulateur hydraulique (29) sont reliés au fluide à filtrer.

4. Dispositif de commande selon la revendication 2 ou 3, **caractérisé en ce que** la première prise de fluide (47) est reliée à une soupape de limitation de pression (69) qui peut être réglée sur une valeur de pression inférieure à celle du fluide à filtrer qui règne au niveau de la deuxième prise de fluide (49).

5. Dispositif de commande selon la revendication 2 ou 3, **caractérisé en ce que** la première prise de fluide (47) est reliée au fluide filtré (9) par le matériau filtrant en forme de bande, dont la pression est inférieure à la pression du fluide à filtrer.

6. Dispositif de commande selon une des revendications 2 à 5, **caractérisé en ce que** la soupape de commande (51) est reliée à l'élément de séparation mobile (31) via un dispositif cinématique (53, 55) qui ne provoque la commutation de la soupape de commande (51) que dans les positions finales de l'élément de séparation (31).

7. Dispositif de commande selon la revendication 6, **caractérisé en ce qu'**un mécanisme à passage brusque basculant surcentré (53, 55) est prévu comme dispositif cinématique pour une ouverture et une fermeture pour l'essentiel soudaines des prises de fluide correspondantes (47, 49).

8. Dispositif de commande selon une des revendications 2 à 7, **caractérisé en ce que** l'élément de séparation (31) est précontraint dans sa position finale correspondant à la position ouverte de la première prise de fluide (47) et à la position fermée de la deuxième prise de fluide (49) au moyen d'une disposition de ressorts (45).

9. Dispositif de commande selon la revendication 8, **caractérisé en ce que** l'élément de séparation mobile (31) de l'accumulateur hydraulique (29) est relié à une barre d'actionnement (17) à laquelle on peut faire effectuer des allers et retours dans le sens longitudinal grâce à un mouvement et qui fait partie du mécanisme qui transforme le mouvement de l'élément de séparation (31) en mouvement d'avance du matériau filtrant.

10. Dispositif de commande selon la revendication 9, **caractérisé par** un entraînement à rochet (15) pouvant être actionné au moyen de la barre d'actionnement (17) qui fait des allers et retours avec une roue à cliquet (23) pouvant être actionnée par le mouvement de la barre d'actionnement (17) dans un seul sens de rotation, qui est reliée à un arbre d'enroulement (13) pour l'entraînement d'un rouleau (11) du matériau filtrant en forme de bande.

11. Dispositif de commande selon la revendication 10, **caractérisé en ce que** le mécanisme qui génère le mouvement d'avance du matériau filtrant en forme de bande est disposé sur une bielle oscillante (71) qui est logée de manière à pouvoir pivoter, afin d'assurer un déplacement de l'axe de rotation de l'arbre d'enroulement (13) qui permette une adaptation à différents diamètres d'enroulement du matériau filtrant en forme de bande.

12. Dispositif de commande selon une des revendications 1 à 11, **caractérisé en ce que** l'accumulateur hydraulique (29) est disposé dans le ou contre l'espace (3) qui contient le fluide à filtrer du dispositif de filtre à bande correspondant et **en ce que** son premier espace d'accumulation (33) comporte un passage (41) qui permet l'entrée du fluide à filtrer.

13. Dispositif de commande selon les revendications 7 et 12, **caractérisé en ce que** l'élément de séparation (31) de l'accumulateur hydraulique est couplé à un organe de manoeuvre (57) du mécanisme à passage brusque basculant (53, 55) qui actionne la soupape de commande (51).

14. Dispositif de commande selon une des revendications 1 à 13, **caractérisé en ce qu'**un accumulateur à membrane (29) est prévu comme accumulateur hydraulique.

15. Dispositif de commande selon les revendications 13 et 14, **caractérisé en ce qu'**une plaque de pression (37) placée contre la membrane (31) de l'accumulateur à membrane (29), qui est couplée à l'organe de manoeuvre (57) du mécanisme à passage brusque basculant (53, 55) est prévue.

16. Dispositif de commande selon la revendication 15, **caractérisé en ce que** le mécanisme à passage brusque basculant (53, 55) et la soupape de commande (51) sont logés dans le deuxième espace de retenue (35) de l'accumulateur à membrane (29).
